(19) **Europäisches Patentamt / European Patent Office / Office européen des brevets**

(11) **EP 4 340 063 A1**

(12) **EUROPEAN PATENT APPLICATION**
published in accordance with Art. 153(4) EPC

(43) Date of publication:
**20.03.2024   Bulletin 2024/12**

(21) Application number: **22904711.3**

(22) Date of filing: **09.12.2022**

(51) International Patent Classification (IPC):
*H01M 4/36* *(2006.01)*     *H01M 4/38* *(2006.01)*
*H01M 4/58* *(2010.01)*     *H01M 4/62* *(2006.01)*
*H01M 10/052* *(2010.01)*     *H01M 4/02* *(2006.01)*

(52) Cooperative Patent Classification (CPC):
**C01B 33/00; H01M 4/02; H01M 4/36; H01M 4/38; H01M 4/58; H01M 4/62; H01M 10/052;** Y02E 60/10

(86) International application number:
**PCT/KR2022/020025**

(87) International publication number:
**WO 2023/106882 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **10.12.2021   KR 20210176769**

(71) Applicant: **LG ENERGY SOLUTION, LTD.**
**Seoul 07335 (KR)**

(72) Inventors:
• **OH, Ilgeun**
**Daejeon 34122 (KR)**

• **PARK, Semi**
**Daejeon 34122 (KR)**
• **PARK, Heeyeon**
**Daejeon 34122 (KR)**
• **SHIN, Sun Young**
**Daejeon 34122 (KR)**
• **LEE, Yong Ju**
**Daejeon 34122 (KR)**
• **CHOI, Junghyun**
**Daejeon 34122 (KR)**

(74) Representative: **Hoffmann Eitle**
**Patent- und Rechtsanwälte PartmbB**
**Arabellastraße 30**
**81925 München (DE)**

(54) **ANODE ACTIVE MATERIAL, ANODE SLURRY INCLUDING SAME, ANODE INCLUDING SAME, SECONDARY BATTERY INCLUDING SAME, AND METHOD FOR PREPARING ANODE ACTIVE MATERIAL**

(57)     Disclosed are a negative electrode active material, a negative electrode slurry including the same, a negative electrode including the slurry, a secondary battery including the negative electrode, and a method of manufacturing a negative electrode active material.

**EP 4 340 063 A1**

**Description**

[Technical Field]

This application claims priority to and the benefit of Korean Patent Application No. 10-2021-0176769 filed with the Korean Intellectual Property Office on December 10, 2021, the entire contents of which are incorporated herein by reference.

The present invention relates to a negative electrode active material, a negative electrode slurry including the same, a negative electrode including the negative electrode slurry, a secondary battery including the negative electrode, and a method of manufacturing a negative electrode active material.

[Background Art]

Recently, with the rapid spread of electronic devices using batteries, such as mobile phones, laptop computers and electric vehicles, the demand for small, lightweight, and relatively high-capacity secondary batteries is rapidly increasing. In particular, a lithium secondary battery is in the limelight as a driving power source for portable devices because it is lightweight and has a high energy density. Accordingly, research and development efforts to improve the performance of a lithium secondary battery are being actively conducted.

In general, a lithium secondary battery includes a positive electrode, a negative electrode, a separator interposed between the positive electrode and the negative electrode, an electrolyte, an organic solvent, and the like. In addition, the positive electrode and the negative electrode may be formed on current collectors with active material layers each including a positive electrode active material and a negative electrode active material. In general, for the positive electrode, a lithium-containing metal oxide such as $LiCoO_2$ and $LiMn_2O_4$ is used as the positive electrode active material, and for the negative electrode, a carbon-based active material or a silicon-based active material that does not contain lithium is used as the negative electrode active material.

Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction during charging and discharging is high, and has an irreversible capacity is high, so that the initial efficiency is low.

On the other hand, among the silicon-based active materials, a silicon-based oxide, specifically, a silicon-based oxide represented by $SiO_x$ (0<x<2) has an advantage in that the degree of volume expansion/contraction during the charging and discharging is lower as compared with other silicon-based active materials such as silicon (Si). However, the silicon-based oxide still has a disadvantage in that the initial efficiency is lowered due to the presence of irreversible capacity.

In this regard, studies have been conducted to reduce the irreversible capacity and to improve the initial efficiency by doping or intercalating metals such as Li, Al, and Mg into silicon-based oxides. However, in the case of a silicon-based oxide doped with metal by a general method, a carbon layer coated on the silicon-based oxide is likely to be damaged and a lithium by-product is likely to be formed. Therefore, a negative electrode slurry including a general metal-doped silicon-based oxide as a negative electrode active material has a problem in that the metal oxide formed by doping metal reacts with moisture to increase a pH of a negative electrode slurry and to change the viscosity. Accordingly, the state of the manufactured negative electrode is poor and the charge/discharge efficiency of the negative electrode is lowered.

Accordingly, there is a need to develop a negative electrode active material capable of improving phase stability of a negative electrode slurry including a silicon-based oxide and improving charge/discharge efficiency of a negative electrode manufactured from the slurry.

CITATION LIST

(Patent Literature 1) Korean Patent Application Publication No. 10- 2012-0051765

[Detailed Description of the Invention]

[Technical Problem]

The present invention relates to a negative electrode active material, a negative electrode slurry including the same, a negative electrode including the negative electrode slurry, a secondary battery including the negative electrode, and a method of manufacturing a negative electrode active material.

[Technical Solution]

An exemplary embodiment of the present invention provides a negative electrode active material including: silicon-based particles including a Li compound; and a carbon layer provided on at least a portion of the silicon-based particles, in which, upon X-ray diffraction analysis, a ratio (p2/p1) of a peak intensity (p2) appearing at 18.8° to 19.0° to a peak intensity (p1) appearing at 24.7° to 24.9° is 0.7 or greater, and in which a pH is 7 to 10 when 1g of the negative electrode active material is dispersed in 100 mL of water at 25°C.

Another exemplary embodiment of the present invention provides a method of manufacturing a negative electrode active material, the method including preparing a Si source and a Li source; vaporizing the Si source and the Li source by heat treatment; forming silicon-based particles including a Li compound by cooling a mixed gas of the vaporized Si source and Li source; and forming a carbon layer on the silicon-based particles.

Still another exemplary embodiment of the present invention provides a negative electrode slurry including the negative electrode active material.

Yet another exemplary embodiment of the present invention provides a negative electrode including the negative electrode slurry.

Still yet another exemplary embodiment of the present invention provides a secondary battery including the negative electrode.

[Advantageous Effects]

Since the negative electrode active material according to an exemplary embodiment of the present invention has a lower pH close to neutral pH than that of the related art when forming the slurry, the processability of the slurry is improved. In addition, since crystalline $Li_2SiO_3$ and crystalline $Li_2Si_2O_5$ satisfy the appropriate ratio (p2/p1) or greater, the secondary battery including the negative electrode made of the negative electrode active material has effects of improving the discharge capacity, initial efficiency, resistance performance and/or lifespan characteristics of the battery.

[Best Mode]

Hereinafter, the present specification will be described in more detail.

In the present specification, unless explicitly described to the contrary, the word "comprise", "includes" and "have" and variations thereof will be understood to imply the inclusion of stated elements but not the exclusion of any other elements.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the crystallinity of the structure included in the negative electrode active material can be confirmed through X-ray diffraction analysis, and the X-ray diffraction analysis may be performed by using an X-ray diffraction (XRD) analyzer (product name: D4-endavor, manufacturer: Bruker), or by appropriately adopting devices that are used in the art, in addition to the above device.

In the present specification, the presence or absence of elements and the contents of elements in the negative electrode active material can be confirmed through ICP analysis, and the ICP analysis may be performed using an inductively coupled plasma atomic emission spectrometer (ICPAES, Perkin-Elmer 7300).

In the present specification, the average particle diameter ($D_{50}$) may be defined as a particle diameter corresponding to 50% of the cumulative volume in the particle size distribution curve (graph curve of the particle size distribution). The average particle diameter ($D_{50}$) may be measured using, for example, a laser diffraction method. In the laser diffraction method, in general, particle diameters ranging from a submicron range to several millimeters can be measured, and results with high reproducibility and high resolvability can be obtained.

Hereinafter, preferred embodiments of the present invention will be described in detail. However, it should be understood that the exemplary embodiments of the present invention may be modified in various forms and the scope of the present invention is not limited to the exemplary embodiments described below.

**<Negative electrode active material>**

An exemplary embodiment of the present invention provides a negative electrode active material including: silicon-based particles including a Li compound; and a carbon layer provided on at least a portion of the silicon-based particles, in which, upon X-ray diffraction analysis, a ratio (p2/p1) of a peak intensity (p2) appearing at 18.8° to 19.0° to a peak intensity (p1) appearing at 24.7° to 24.9° is 0.7 or greater, and in which a pH is 7 to 10 when 1g of the negative electrode active material is dispersed in 100 mL of water at 25°C.

In general, when doping silicon-based particles with Li, known is a method of coating a carbon layer on silicon-based particles and then doping the silicon-based particles with Li by heat-treating (generally below 1200°C) the silicon-based particles together with lithium powders, or heat-treating (generally below 1200°C) silicon-based particles and lithium powders together and then coating a carbon layer. During Li doping by the above method, a Li compound (lithium silicate, etc.) is formed in the silicon-based particles, but a content of the Li compound is higher toward an outer side of the particles. That is, the Li compound is non-uniformly formed in an inside and on an outer side of the silicon-based particles.

The negative electrode active material formed by the above method has an advantage that a Li compound (lithium silicate, etc.) is formed in the silicon-based particles, and therefore, the initial efficiency is high. However, the structure of the particles is destroyed as the Li compound is formed in the existing silicon-based particles, and the resultant stress aggregates Si phase in the silicon-based particles. As a result, the negative electrode active material is vulnerable to volume expansion/contraction.

In addition, when lithium doping is performed after coating the carbon layer, the carbon layer is damaged, and lithium by-product that have not reacted with the silicon-based particles exist on a surface of the active material. Therefore, the slurry becomes basic due to the lithium by-products present on the surface of the active material during the manufacturing of the aqueous slurry, and Si of the negative electrode active material and the base (OH⁻) of the slurry react to generate a gas and to change rheological properties.

When lithium doping is performed before coating the carbon layer, an internal structure of the particles is changed, such as the Li compound in the silicon-based particles permeating into a central portion due to the thermal energy applied during the carbon layer coating, so that the lifespan performance is deteriorated. In addition, since the carbon layer is coated with lithium by-products remaining, which have not reacted with the silicon-based particles, passivation characteristics of the carbon layer are deteriorated.

In order to solve the problems, the present invention provides a negative electrode active material formed by doping lithium into silicon-based particles by vaporizing a Si source and a Li source by heat treatment, respectively.

The negative electrode active material manufactured as described above is a negative electrode active material in which a carbon layer is formed after uniformly doping Li into the silicon-based particles, and has a strong passivation ability by the carbon layer because the carbon layer is not damaged. In addition, since Li is doped by vaporizing the source, there is no lithium by-product in the negative electrode active material. Therefore, when manufacturing an aqueous slurry, the slurry shows a lower pH close to a neutral pH than that of the related art, thereby suppressing side reactions of the slurry and improving processability. Accordingly, a secondary battery including a negative electrode made of the negative electrode active material has effects of improving the discharge capacity, initial efficiency, resistance performance and/or lifespan characteristics of the battery.

The negative electrode active material according to the exemplary embodiment of the present invention includes silicon-based particles, and the silicon-based particles include a Li compound. Specifically, the silicon-based particles may include Si and Li compounds.

The Li compound may correspond to a matrix in the silicon-based composite particles. The Li compound may exist in a form of at least one of a lithium atom, lithium silicate, lithium silicide or a lithium oxide in the silicon-based particles. When the silicon-based particles include a Li compound, the initial efficiency is improved.

Specifically, the Li compound may be a form of including Si and/or $SiO_2$, and the Si may form a phase. The silicon-based particle may be of a structure including $SiO_x(0 <x<2)$ and a Li compound.

The $SiO_x(0<x<2)$ may be a form of including Si and/or $SiO_2$, and the Si may form a phase. For example, the $SiO_x(0<x<2)$ may be a composite including amorphous $SiO_2$ and a Si crystal. That is, x corresponds to a ratio of the number of O to Si included in the $SiO_x(0<x<2)$. When the silicon-based particle includes the $SiO_x(0<x<2)$, a discharge capacity of a secondary battery can be improved. Specifically, the $SiO_x(0<x<2)$ may be a compound represented by $SiO_x(0.5 \leq x \leq 1.5)$, in terms of structural stability of an active material.

The Li compound may be formed by heating and vaporizing a Li source including $Li_2SiO_3$, $Li_2Si_2O_5$, $Li_4SiO_4$, Li metal and the like, causing the heated and vaporized Li source to react with heated and vaporized Si vapor or SiO vapor and then cooling the same.

That is, the Li may be distributed on the surface and/or in the inside of the silicon-based particles in a form of being doped to the silicon-based particles. The Li may be distributed on the surface and/or in the inside of the silicon-based particles to control volume expansion/contraction of the silicon-based particles to an appropriate level and to prevent damage to the active material. In addition, the Li may be contained, in terms of lowering a ratio of an irreversible phase (for example, $SiO_2$) of silicon-based oxide particles to increase the efficiency of the active material.

The Li compound may be lithium silicate, and the lithium silicate is represented by $Li_aSi_bO_c$ ($2 \leq a \leq 4$, $0 < b \leq 2$, $2 \leq c \leq 5$) and divided into crystalline lithium silicate and amorphous lithium silicate. The crystalline lithium silicate may be present in the silicon-based particles in a form of at least one lithium silicate selected from the group consisting of $Li_2SiO_3$, $Li_4SiO_4$ and $Li_2Si_2O_5$, and the amorphous lithium silicate may have a complex form of $Li_aSi_bO_c$ ($2 \leq a \leq 4$, $0 < b \leq 2$, $2 \leq c \leq 5$). However, the present invention is not limited thereto.

In the exemplary embodiment of the present invention, the silicon-based particles include $Li_2SiO_3$ and $Li_2Si_2O_5$.

In the exemplary embodiment of the present invention, the Li compound includes $Li_2SiO_3$ and $Li_2Si_2O_5$.

In the case of the existing Li doping method, since silicon-based particles are coated with carbon and then heat-treated and doped with lithium powders, a concentration of Li on the surface of the particles is high, and Li is little present in the center of the silicon-based particles. On the other hand, in the case of the negative electrode active material according to the present invention, Li is uniformly doped from the center to the surface of the silicon-based particles.

In the exemplary embodiment of the present invention, a concentration of Li may not have a concentration gradient from the center to the surface of the silicon-based particles. That is, the concentration of Li may be constant from the center to the surface of the silicon-based particle.

In the exemplary embodiment of the present invention, a concentration of Si may not have a concentration gradient from the center to the surface of the silicon-based particle. That is, the concentration of Si may be constant from the center to the surface of the silicon-based particle.

Not having a concentration gradient from the center to the surface of the silicon-based particles means that a case in which the concentration of a corresponding element does not show a continuous increase/decrease is included. For example, it may be meant that, based on a distance Ra from the center to the surface of the silicon-based particle, a concentration of an element does not have a concentration gradient in each of an area from the center to 0.25Ra, an area from 0.25Ra to 0.5Ra, an area from 0.5Ra to 0.75Ra, and an area from 0.75Ra to the surface. The distance Ra from the center to the surface of the silicon-based particle may be assumed to be the same as a radius when the silicon-based particle is converted into a sphere having the same cross-sectional area, and the center of the silicon-based particle may mean the center of gravity.

In the exemplary embodiment of the present invention, upon X-ray diffraction analysis of the negative electrode active material, a ratio (p2/p1) of a peak intensity (p2) appearing at 18.8° to 19.0° to a peak intensity (p1) appearing at 24.7° to 24.9° may be 0.7 or greater.

Specifically, p2/p1 may be 0.75 or greater, and more specifically, 1 or greater, 10 or greater, 30 or greater, or 50 or greater.

Upon X-ray diffraction analysis of the negative electrode active material, when a peak appears at 24.7° to 24.9°, an upper limit of p2/p1 may be 300, 200, or 150.

Upon X-ray diffraction analysis of the negative electrode active material, the peak (p1) appearing at 24.7° to 24.9° may be a peak due to crystalline $Li_2Si_2O_5$.

Upon X-ray diffraction analysis of the negative electrode active material, the peak (p2) appearing at 18.8° to 19.0° may be a peak due to crystalline $Li_2SiO_3$.

The crystalline $Li_2Si_2O_5$ is stable in the negative electrode active material, and in particular, side reactions with moisture are less likely to occur in the negative electrode slurry, specifically in the aqueous negative electrode slurry. However, when the negative electrode active material contains a large amount of crystalline $Li_2Si_2O_5$, discharge capacity loss per weight of an active material is high, and the crystalline $Li_2Si_2O_5$ has an unstable structure during charge and discharge, resulting in deterioration of lifespan characteristics.

When a large amount of the crystalline $Li_2SiO_3$ is contained, the discharge capacity loss per weight of an active material can be reduced. The crystalline $Li_2SiO_3$ can greatly increase the initial efficiency due to an electrochemically stable structure, and can effectively improve the lifespan characteristics due to a stable structure even during charge and discharge. On the other hand, in the case of $Li_2SiO_3$, the capacity of the battery is higher based on the same efficiency than the case of using $Li_2Si_2O_5$. However, $Li_2SiO_3$ causes side reactions with moisture in the negative electrode slurry, which intensifies gas generation. Further, by-products formed due to the side reactions with moisture increase pH of the negative electrode slurry, destabilize a phase of the slurry and change the viscosity.

In this regard, in the negative electrode active material of the present invention, the ratio (p2/p1) of the peak intensity (p2) appearing at 18.8° to 19.0° to the peak intensity (p1) appearing at 24.7° to 24.9° upon X-ray diffraction analysis is 0.7 or greater, in which a content of the crystalline $Li_2SiO_3$ and a content of the crystalline $Li_2Si_2O_5$ satisfy an appropriate relationship. Therefore, the irreversible capacity of the negative electrode active material is smoothly removed to improve the initial efficiency and charge/discharge efficiency, and to secure improved capacity, as compared with the same efficiency.

In addition, in the case of negative electrode active materials of the related art, when the crystalline $Li_2SiO_3$ is

contained to some extent, the side reactions in the negative electrode slurry are intensified. However, the negative electrode active material of the present invention, while containing the crystalline $Li_2SiO_3$ to some extent, can secure the phase stability of the negative electrode slurry, and prevent the viscosity from being lowered. Therefore, the quality of the negative electrode can be improved, and the charge/discharge efficiency and capacity can be expressed at excellent levels.

On the other hand, when p2/p1 is less than 0.7, the appropriate capacity and efficiency cannot be secured, and it is difficult to stably maintain the internal structure of the particle with respect to the volume expansion/contraction during charging/discharging.

In the exemplary embodiment of the present invention, the Li compound includes crystalline $Li_2SiO_3$ and crystalline $Li_2Si_2O_5$.

In the exemplary embodiment of the present invention, a content of the crystalline $Li_2SiO_3$ is higher than that of the crystalline $Li_2Si_2O_5$.

In the exemplary embodiment of the present invention, the crystalline $Li_2SiO_3$ may be included in an amount of 20 parts by weight to 70 parts by weight, specifically 30 parts by weight to 55 parts by weight, and more specifically 30 parts by weight to 40 parts by weight, on the basis of 100 parts by weight of a total of the negative electrode active material. When the content of crystalline $Li_2SiO_3$ satisfies the above range, high capacity/high efficiency can be secured, and Si is uniformly distributed in the inside of the particle, thereby preventing deterioration of the internal structure of the particle due to the volume expansion/contraction during charge/discharge.

In the exemplary embodiment of the present invention, the crystalline $Li_2Si_2O_5$ may be included in an amount of 0.1 part by weight to 10 parts by weight, specifically 0.1 part by weight to 5 parts by weight, and more specifically 0.1 part by weight to 4.5 parts by weight, on the basis of 100 parts by weight of the total of the negative electrode active material. When the content of the crystalline $Li_2Si_2O_5$ satisfies the above range, the internal structure of the particle is stably maintained with respect to the volume expansion/contraction even during charge/discharge.

The contents of the crystalline $Li_2SiO_3$ and crystalline $Li_2Si_2O_5$ present in the negative electrode active material can be measured by the Rietveld refinement method after obtaining an X-ray diffraction profile through X-ray diffraction analysis (D4 endeavor/x-ray diffraction).

In the exemplary embodiment of the present invention, Li contained in the silicon-based particles may be included in an amount of 5 parts by weight to 20 parts by weight, 5 parts by weight to 10 parts by weight, or 6 parts by weight to 9 parts by weight, on the basis of 100 parts by weight of the total of the negative electrode active material. Specifically, Li may be included in an amount of 6 parts by weight to 8 parts by weight, and more specifically, 7 parts by weight to 8 parts by weight. As the Li content increases, the initial efficiency increases, but the discharge capacity decreases. Therefore, when the above range is satisfied, appropriate discharge capacity and initial efficiency can be implemented.

The content of the Li element can be confirmed through ICP analysis. Specifically, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of an element to be analyzed. Subsequently, a pre-treated sample solution and a blank sample are introduced into the spectrometer, and by measuring the intensity of each component to calculate an actual intensity, calculating the concentration of each component based on the obtained calibration curve, and performing a conversion such that the sum of the calculated concentrations of the components is equal to a theoretical value, the element content of the prepared negative electrode active material can be analyzed.

A carbon layer may be provided on at least a portion of the surface of the silicon-based particles according to the exemplary embodiment of the present invention. In this case, the carbon layer may be coated on at least a portion of the surface, i.e., partially coated on the surface of the particle, or may be coated on the entire surface of the particle. Conductivity is imparted to the negative electrode active material by the carbon layer, so that the initial efficiency, lifespan characteristics, and battery capacity characteristics of a secondary battery can be improved.

Specifically, the carbon layer may include crystalline carbon or amorphous carbon, and preferably may include amorphous carbon.

The crystalline carbon may further improve conductivity of the negative electrode active material. The crystalline carbon may include at least one selected from the group consisting of fullerene, carbon nanotubes, and graphene.

The amorphous carbon may appropriately maintain the strength of the carbon layer to suppress expansion of the silicon-based particle. The amorphous carbon may be a carbide of at least one substance selected from the group consisting of tar, pitch, and other organic materials, or may be a carbon-based material formed by using a hydrocarbon as a source of chemical vapor deposition.

The carbide of the other organic materials may be an organic carbide selected from sucrose, glucose, galactose, fructose, lactose, mannose, ribose, aldohexose or ketohexose carbide, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, etc.

Specifically, the carbon layer may be formed by heat treatment after disposing a carbonaceous precursor on the silicon-based particles. The carbonaceous precursor may be graphene, graphite and the like for production of crystalline carbon, and may be a carbide of at least one selected from the group consisting of tar, pitch, and other organic materials for production of amorphous carbon, or a carbon-based material formed by using hydrocarbons such as methane, ethane, and acetylene as a source of chemical vapor deposition.

In the exemplary embodiment of the present invention, the carbon layer does not include Li.

In the exemplary embodiment of the present invention, Li is not detected on the surface of the negative electrode active material.

In the exemplary embodiment of the present invention, upon XPS analysis of the surface of the negative electrode active material, a molar ratio of Li to C (Li/C mol ratio) may be 1 or less. Specifically, the molar ratio of Li to C (Li/C mol ratio) may be 0.5 or less, 0.3 or less, 0.1 or less, 0.05 or less, or 0.03 or less. The molar ratio of Li to C (Li/C mol ratio) may be 0 or greater or greater than 0.

When the molar ratio of Li to C (Li/C mol ratio) on the surface of the negative electrode active material satisfies the above range, the surface of the negative electrode active material has almost no Li content, and a pH value when dispersed in water is low, such that changes in rheological properties can be prevented when forming slurry. On the other hand, in the case of silicon-based particles doped with Li by the Li doping method of the related art, the molar ratio of Li to C (Li/C mol ratio) on the surface of the negative electrode active material exceeds the above range, and accordingly, when forming the slurry, the slurry becomes a strong base, thereby causing changes in rheological properties of the slurry and side reactions.

This can be confirmed by measuring the Li content on the surface of the negative electrode active material through XPS (Nexsa ESCA System, Thermo Fisher Scientific (NEXSA 1)) depth profile.

The carbon layer effectively prevents elution of $Li_2SiO_3$ from the silicon-based particles. In addition, the carbon layer minimizes lithium by-products on the surface of the negative electrode active material to improve the passivation ability by the carbon layer, so that pH of the slurry can be adjusted when preparing the aqueous slurry, side reactions can be reduced and rheological properties can be improved.

In the exemplary embodiment of the present invention, pH when 1 g of the negative electrode active material is dispersed in 100 mL of water at 25°C may be 7 to 10. Specifically, pH may be 8 to 10, and more specifically, 9 to 9.5.

In the negative electrode active material according to the exemplary embodiment of the present invention, Li is uniformly doped into the silicon-based particles, and lithium by-products are not generated in the doping process. In addition, since the carbon layer is thereafter coated to cover the silicon-based particles by the carbon layer, a pH value when dispersed in water is low, so that changes in rheological properties during slurry formation can be prevented. On the other hand, in the case of silicon-based particles doped with Li by the Li doping method of the related art, the carbon layer is damaged or lithium by-products exist, such that the pH value when dispersed in water exceeds 9, expressing a strong base. Therefore, the slurry becomes a strong base, causing changes in rheological properties of the slurry and side reactions.

In the exemplary embodiment of the present invention, lithium by-products including one or more selected from the group consisting of lithium silicate, $Li_2O$, LiOH and $Li_2CO_3$ are not present on the surface of the negative electrode active material. This can be confirmed by measuring the Li content on the surface of the negative electrode active material through XPS (Nexsa ESCA System, Thermo Fisher Scientific (NEXSA 1)) depth profile.

In the case of the existing Li doping method, since silicon-based particles are coated with carbon and then heat-treated and doped with lithium powders, the carbon layer is damaged and Li compounds are present in the carbon layer. In addition, unreacted lithium may form lithium by-products, which may be then present on the surface of the negative electrode active material.

On the other hand, in the case of the negative electrode active material according to the present invention, since a carbon layer is formed after doping silicon-based particles with lithium, the carbon layer is not damaged and the Li compound is not included in the carbon layer, thereby improving passivation ability by the carbon layer in the aqueous slurry. In addition, even when there is unreacted Li, since the carbon layer is formed thereon, lithium by-products are not present on the surface of the negative electrode active material.

In the exemplary embodiment of the present invention, the carbon layer may be included in an amount of 1 part by weight to 10 parts by weight, specifically 1 part by weight to 5 parts by weight, and more specifically 2 parts by weight to 4 parts by weight on the basis of 100 parts by weight of the total of the negative electrode active material. When the above range is satisfied, reduction in capacity and efficiency of the negative electrode active material can be prevented.

An average particle diameter $(D_{50})$ of the negative electrode active material may be 0.1 um to 30 um, specifically 1 um to 20 $\mu$m, and more specifically 1 um to 15 um. When the above range is satisfied, the structural stability of the active material is ensured during charging and discharging, a problem that the level of volume expansion/contraction increases as the particle diameter becomes excessively large can be prevented, and a problem that the initial efficiency is reduced when the particle diameter is excessively small can also be prevented.

The particle size of the negative electrode active material may be adjusted through a method such as a ball mill, a jet mill, or air classification, but the present invention is not limited thereto.

**<Method of manufacturing negative electrode active material>**

Another exemplary embodiment of the present invention provides a method of manufacturing a negative electrode active material, the method including preparing a Si source and a Li source; vaporizing the Si source and the Li source by heat treatment; forming silicon-based particles including a Li compound by cooling a mixed gas of the vaporized Si source and Li source; and forming a carbon layer on the silicon-based particles.

An exemplary embodiment of the present invention provides a method of manufacturing a negative electrode active material, the method including preparing a Si source and a Li source; vaporizing each of the Si source and the Li source by heat treatment; mixing the vaporized Si source and Li source and cooling the mixed gas to form silicon-based particles including a Li compound; and forming a carbon layer on the silicon-based particles.

The method of manufacturing a negative electrode active material according to the exemplary embodiment of the present invention includes preparing a Si source and a Li source.

In the exemplary embodiment of the present invention, the Si source may include one or more selected from the group consisting of Si powders and SiO powders. Preferably, the Si source may include Si powders and may further include SiO powders. According to the present invention, Si is vaporized as described above, so that vaporization is possible at a lower temperature and it is easy to control the process. On the other hand, if Si and $SiO_2$ are vaporized or only SiO is vaporized, the temperature condition is not mild, and it is difficult to control the process.

In the exemplary embodiment of the present invention, the Li source may include one or more selected from the group consisting of $Li_2SiO_3$ powders, $Li_2Si_2O_5$ powders, $Li_4SiO_4$ powders and Li powders.

In particular, when lithium silicate powders are used, composition control is easy and the internal structure of silicon-based particles can be synthesized more uniform.

The Li source may include $Li_2SiO_3$ powders in an amount of 30 parts by weight or more, 40 parts by weight or more, 50 parts by weight or more, 70 parts by weight or more, 80 parts by weight or more, or 90 parts by weight or more on the basis of a total of the Li source.

A weight ratio of the Si source and the Li source may be 5:1 to 1:5, 3:1 to 1:3, or 2:1 to 1:2. Preferably, the weight ratio may be 1.2:1 to 1:1.2, more preferably 1:1. When the above range is satisfied, it is possible to constitute particles in which Si and Li compounds (lithium silicate) are uniformly distributed.

The method of manufacturing a negative electrode active material according to the exemplary embodiment of the present invention includes vaporizing the Si source and the Li source by heat treatment. Specifically, the Si source and the Li source may be mixed and heat treated together, or the Si source and the Li source may be heat treated, respectively.

The heat treatment may be performed at 1200°C to 1600°C, preferably 1200°C to 1500°C, 1300°C to 1500°C or 1300°C to 1400°C for 1 hour to 10 hours.
The heat treatment may be performed in a vacuum state or at 0.01 torr to 0.1 torr, preferably 0.01 torr to 0.05 torr.

The method of manufacturing a negative electrode active material according to the exemplary embodiment of the present invention includes forming silicon-based particles including a Li compound by cooling a mixed gas of the vaporized Si source and Li source.

The mixed gas may be formed by mixing the Si source and the Li source and then heat-treating the sources together, or by heat-treating the Si source and the Li source, respectively, and then mixing the heat-treated sources.

The cooling may be performed at 500°C to 900°C, preferably 600°C to 850°C or 600°C to 800°C for 1 hour to 10 hours.

The cooling may be performed in a vacuum state or at 0.01 torr to 0.1 torr, preferably 0.01 torr to 0.05 torr.

The silicon-based particles formed through the above processes include a Li compound, and the Li compound may be present in a form of at least one of a lithium atom, lithium silicate, lithium silicide, or a lithium oxide in the silicon-based particles, and preferably, may be present in the form of lithium silicate.

The Li compound may be a form of including Si and $SiO_2$, and the Si may form a phase. The Si and $SiO_2$ may be represented by $SiO_x(0<x<2)$, and the silicon-based particles may have a structure including $SiO_x(0<x<2)$ and Li.

The method of manufacturing a negative electrode active material according to the exemplary embodiment of the present invention includes forming a carbon layer on the silicon-based particles.

The carbon layer may be formed by using chemical vapor deposition (CVD) using hydrocarbon gas or by carbonizing a material serving as a carbon source.

Specifically, the carbon layer may be formed by introducing the silicon-based particles into a reactor and depositing hydrocarbon gas at 1000°C or lower by chemical vapor deposition (CVD). The hydrocarbon gas may be methane, ethane, propane, or acetylene, the carbon source may be graphene, graphite and the like for production of crystalline carbon, and may be a carbide of at least one selected from the group consisting of tar, pitch, and other organic materials for production of amorphous carbon, or a carbon-based material formed by using hydrocarbons such as methane, ethane, and acetylene as a source of chemical vapor deposition.

The hydrocarbon gas may be heat-treated at 600°C to 1000°C, preferably at 600°C to 900°C for 1 hour to 5 hours.

**<Negative electrode slurry>**

An exemplary embodiment of the present invention provides a negative electrode slurry including the negative electrode active material.

The negative electrode slurry may include the negative electrode active material, a binder, and a conductive material.

As the negative electrode active material, the negative electrode active material according to the exemplary embodiment of the present invention may be applied.

In the case of the existing Li doping method, when forming the aqueous slurry, the Li compound is eluted from the damaged carbon layer of the negative electrode active material, and when forming the aqueous slurry, pH exceeds 11 and the slurry becomes basic due to lithium by-products caused by unreacted lithium. As a result, the base included in the negative electrode slurry reacts with Si present in the negative electrode active material to generate gas and to change the rheological properties of the slurry.

On the other hand, since the negative electrode slurry according to the present invention uses the negative electrode active material in which silicon-based particles are uniformly doped with lithium and are then formed with a carbon layer, elution of the lithium compound is suppressed due to passivation by the carbon layer in the aqueous slurry. In addition, there are almost no unreacted lithium by-products, so that the slurry shows a lower pH close to neutral pH than the slurry of the related art. Therefore, there is a small amount of base in the slurry, so that the side reactions are suppressed and the rheological properties are improved.

In the exemplary embodiment of the present specification, pH of the negative electrode slurry at 25°C may be 7 to 9, specifically 7.5 to 8.5, and more specifically 7.5 to 8. When pH of the negative electrode slurry satisfies the above range, the rheological properties of the slurry are stabilized. On the other hand, when pH of the negative electrode slurry is less than 7 or pH of the negative electrode slurry exceeds 9, carboxymethylcellulose (CMC) used as a thickener is decomposed, resulting in lowering in viscosity of the slurry and a decrease in dispersion degree of the active material included in the slurry.

According to the exemplary embodiment of the present invention, the binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to the exemplary embodiment of the present invention, the conductive material is not particularly limited as long as the conductive material has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon; metal powders such as aluminum, and nickel powders; a conductive whisker such as zinc oxide and potassium titanate; a conductive metal oxide such as titanium oxide; a conductive material such as polyphenylene derivative, and the like may be used.

In the exemplary embodiment of the present invention, the negative electrode slurry may further include a thickener. The thickener may be carboxymethylcellulose (CMC), but is not limited thereto, and thickeners used in the art may be appropriately employed.

The negative electrode slurry may further include an additional negative electrode active material.

As the additional negative electrode active material, a compound capable of reversible intercalation and deintercalation of lithium may be used. Specific examples include a carbonaceous material such as artificial graphite, natural graphite, graphitized carbon fiber, and amorphous carbon; a metallic compound capable of being alloyed with lithium, such as Si, Al, Sn, Pb, Zn, Bi, In, Mg, Ga, Cd, Si alloys, Sn alloys, or Al alloys; metallic oxides capable of doping and undoping lithium, such as $SiO_\beta(0<\beta<2)$, $SnO_2$, vanadium oxide, lithium titanium oxide, and lithium vanadium oxide; or a composite including the metallic compound and the carbonaceous material, such as a Si-C composite or a Sn-C composite, and any one thereof or a mixture of two or more thereof may be used. In addition, a metal lithium thin film may be used as the negative electrode active material. In addition, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite. pyrolytic carbon, mesophase pitch based carbon fiber, meso-carbon microbeads, mesophase pitches, and high-temperature fired carbon such as petroleum- or coal tar pitch-derived cokes.

The additional negative electrode active material may be a carbon-based negative electrode active material, for example graphite.

In the exemplary embodiment of the present invention, a weight ratio of the negative electrode active material and the additional negative electrode active material included in the negative electrode slurry may be 1:99 to 30:70, and specifically 5:95 to 30:70 or 10:90 to 20:80.

In the exemplary embodiment of the present invention, the entire negative electrode active materials included in the negative electrode slurry may be included in an amount of 60 parts by weight to 99 parts by weight, and specifically 70 parts by weight to 98 parts by weight on the basis of 100 parts by weight of a total of solid content of the negative electrode slurry.

In the exemplary embodiment of the present invention, the binder may be included in an amount of 0.5 part by weight to 30 parts by weight, and specifically 1 part by weight to 20 parts by weight, on the basis of 100 parts by weight of the total of the solid content of the negative electrode slurry.

In the exemplary embodiment of the present invention, the conductive material may be included in an amount of 0.5 part by weight to 25 parts by weight, specifically 1 part by weight to 20 parts by weight on the basis of 100 parts by weight of the total of the solid content of the negative electrode slurry.

In the exemplary embodiment of the present invention, the thickener may be included in an amount of 0.5 part by weight to 25 parts by weight, specifically 0.5 part by weight to 20 parts by weight, and more specifically 1 part by weight to 20 parts by weight on the basis of 100 parts by weight of the total of the solid content of the negative electrode slurry.

The negative electrode slurry according to the exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In the exemplary embodiment of the present invention, a weight of the solid content of the negative electrode slurry may be 20 parts by weight to 75 parts by weight, and specifically 30 parts by weight to 70 parts by weight on the basis of 100 parts by weight of the total of the negative electrode slurry.

## <Negative electrode>

The negative electrode according to an exemplary embodiment of the present invention may include the negative electrode slurry described above.

The negative electrode according to the exemplary embodiment of the present invention may include the negative electrode active material described above.

Specifically, the negative electrode may include a negative electrode current collector and a negative electrode active material layer arranged on the negative electrode current collector. The negative electrode active material layer may include the negative electrode active material. Furthermore, the negative electrode active material layer may further include a binder and/or a conductive material.

The negative electrode may be manufactured by manufacturing a negative electrode slurry including the negative electrode active material described above; applying the negative electrode slurry on a negative electrode current collector; and drying and roll-pressing the applied negative electrode slurry.

The negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, or the like may be used. Specifically, transition metals that adsorb carbon well, such as copper and nickel, may be used for the negative electrode current collector. A thickness of the negative electrode current collector may be 6 um to 20 um. However, the thickness of the negative electrode current collector is not limited thereto.

In addition, the descriptions of the negative electrode active material, the binder, and the conductive material are the same as described above.

**<Secondary Battery>**

A secondary battery according to an exemplary embodiment of the present invention may include the negative electrode according to the exemplary embodiment of the present invention described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without inducing chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_3$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.5$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve adhesion between particles of the positive electrode active material and adhesive force between the positive electrode active material and the positive electrode current collector. Specific examples may include polyvinylidenefluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The separator serves to separate the negative electrode and the positive electrode and to provide a movement path of lithium ions, in which any separator may be used without particular limitation as long as it is typically used as a separator in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or greater layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrrolactone , 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, such a combined use may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

Another embodiment of the present invention provides a battery module including the secondary battery as a unit cell, and a battery pack including the same. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Examples and Comparative Examples>**

**Example 1**

94g of powders of Si and $Li_2SiO_3$ mixed in a molar ratio of 2:1 was mixed in a reactor and vacuum-heated to a sublimation temperature of 1,400°C. Then, a mixed gas of vaporized Si and $Li_2SiO_3$ was reacted in a cooling zone in a vacuum state where a cooling temperature was 800°C, and condensed into a solid phase to prepare silicon-based particles. The silicon-based particles were pulverized for 3 hours using a ball mill to adjust the average particle diameter ($D_{50}$) to 6 um. Thereafter, the silicon-based particles were positioned in a hot zone of a CVD apparatus while maintaining an inert gas atmosphere by causing Ar gas to flow, and a reaction was carried out at $10^{-1}$ torr for 5 hours while blowing methane into a hot zone of 900°C using Ar as carrier gas, thereby manufacturing a negative electrode active material in which a carbon layer was formed on the surface of the silicon-based particles.

**Example 2**

A negative electrode active material was manufactured by the same method as in Example 1 except that powders of Si, $Li_2SiO_3$ and $Li_2Si_2O_5$ were mixed in a ratio of 2:0.4:0.6.

**Example 3**

A negative electrode active material was manufactured by the same method as in Example 1 except that powders of Si, $Li_2SiO_3$ and $Li_4SiO_4$ were mixed in a ratio of 2:0.95:0.05.

**Comparative Example 1**

94g of powders of Si and $SiO_2$ mixed in a molar ratio of 1:1 was mixed in a reactor and vacuum-heated to a sublimation temperature of 1,400°C. Then, a mixed gas of vaporized Si and $SiO_2$ was reacted in a cooling zone in a vacuum state where a cooling temperature was 800°C, and condensed into a solid phase to form silicon-based particles. The silicon-based particles were pulverized for 3 hours using a ball mill to adjust the average particle diameter ($D_{50}$) to 6 um. Thereafter, the silicon-based particles were positioned in a hot zone of a CVD apparatus while maintaining an inert gas atmosphere by causing Ar gas to flow, and a reaction was carried out at $10^{-1}$ torr for 5 hours while blowing methane into a hot zone of 900°C using Ar as carrier gas, thereby forming a carbon layer on the surface of the silicon-based particles. Then, the particles were mixed with 8 g of Li metal powders. The mixture was subjected to an additional heat treatment at a temperature of 800°C in an inert atmosphere to manufacture a negative electrode active material.

**Comparative Example 2**

A negative electrode active material was manufactured by the same method as in Comparative Example 1 except that the content of Li metal powders was 5 g.

**Comparative Example 3**

A negative electrode active material layer in which an $AlPO_4$ layer was coated on the negative electrode active material manufactured in Comparative Example 1 was manufactured.
Specifically, a solution in which 0.1M of an $Al_2(SO_4)_3$ solution and 0.1M of a $H_3PO_4$ solution were mixed in a ratio of 1:2 to 1:6 and the negative electrode active material manufactured in Comparative Example 1 were mixed in a weight ratio of 1:5, stirred for 1 hour, filtered, and dried to manufacture a negative electrode active material coated with the $AlPO_4$ layer in a weight ratio of 1%.

**Comparative Example 4**

A negative electrode active material was manufactured by the same method as in Example 1 except that powders of Si, $Li_2SiO_3$ and $Li_2Si_2O_5$ were mixed in a ratio of 2:0.2:0.8.
The composition of the negative electrode active materials manufactured in Examples and Comparative Examples described above was measured as follows and shown in Table 1.

**<X-ray diffraction analysis>**

The X-ray diffraction analysis was conducted with CuKα X-ray by using an X-ray diffraction (XRD) device (product name: D4-endavor, manufacturer: Bruker) in a state in which a powder-type sample was sampled on a holder.

**<Measurement of content of carbon layer>**

The content of the carbon layer was measured using CS-ANALYZER (CS-800, ELTRA).

**<Analysis by X-ray photoelectron spectroscopy (XPS)>**

The molar ratio of Li to C (Li/C mol ratio) on the surface of the negative electrode active material was confirmed through XPS (Nexsa ESCA System, Thermo Fisher Scientific (NEXSA 1)) depth profile. Specifically, the depth profile was carried out up to for 3,000 seconds using monatomic Ar (low current), and the content of the element was confirmed through the result of the depth profile at 10 seconds.
Measurement and data processing conditions were as follows.

- X-ray source: Monochromated AlKα (1486.6 eV)
- X-ray spot size: 400 um
- Sputtering gun: Monatomic Ar (energy: 1000 eV, current: low, raster width: 2 mm)
- Etching rate: 0.09 nm/s for $Ta_2O_5$
- Operation Mode: CAE (Constant Analyzer Energy) mode
- Survey scan: pass energy 200 eV, energy step 1 eV
- Narrow scan: scanned mode, pass energy 50 eV, energy step 0.1 eV
- Charge compensation: flood gun off

- SF: Al THERMO1
- ECF: TPP-2M
- BG subtraction: Shirley

Under the above conditions, the molar ratio of Li to C (Li/C mol ratio) was calculated based on the total content of the elements measured on the basis of 100s.

**<pH measurement>**

After dispersing 1 g of the negative electrode active material in 100 g of Di-water at 625°C, pH was measured using a pH meter.

[Table 1]

| | X-ray diffraction analysis | | | carbon layer content (100 parts by weight of total of negative electrode active material) | Li/C mol ratio (XPS depth profile 100s) | pH when dispersed in water |
|---|---|---|---|---|---|---|
| | p1 (24.7° to 24.9°, $Li_2Si_2O_5$) | p2 (18.8° to 19.0°, $Li_2SiO_3$) | p2/p1 | | | |
| Example 1 | 2 | 100 | 50 | 3.5 | 0.012 | 9.2 |
| Example 2 | 130 | 100 | 0.77 | 3.5 | 0.006 | 9.1 |
| Example 3 | 1 | 100 | 100 | 3.5 | 0.023 | 9.3 |
| Comparative Example 1 | 1 | 100 | 100 | 3.4 | 0.723 | 12.5 |
| Comparative Example 2 | 120 | 100 | 0.83 | 3.5 | 0.251 | 12.5 |
| Comparative Example 3 | 1 | 100 | 100 | 3.5 | 0.183 | 12.3 |
| Comparative Example 4 | 200 | 100 | 0.5 | 3.5 | 0.005 | 8.8 |

**<Experimental Example: Evaluation of Discharge**

**Capacity, Initial Efficiency, and Lifespan (Capacity Retention Rate) Characteristics>**

As a negative electrode material, a mixture in which the negative electrode active material manufactured in Example 1 and graphite (average particle diameter ($D_{50}$): 20 um), which was a carbon-based active material, were mixed in a weight ratio of 15:85 was used.

The negative electrode material, styrene-butadiene rubber (SBR) serving as a binder, Super C65 serving as a conductive material, and carboxymethylcellulose (CMC) serving as a thickener were mixed in a weight ratio of 96:2:1:1, and the resulting mixture was then added to distilled water serving as a solvent for negative electrode slurry formation to prepare a negative electrode slurry.

The negative electrode slurry was coated on one surface of a copper current collector (thickness: 15 $\mu$m) serving as a negative electrode current collector in a loading amount of 3.6 mAh/cm$^2$, which was then roll-pressed, and dried in a vacuum oven at 130°C for 10 hours to form a negative electrode active material layer (thickness: 50 um). This was used as the negative electrode according to Example 1 (thickness of negative electrode: 65 pm).

A lithium (Li) metal thin film obtained by cutting into a circular shape of 1.7671 cm$^2$ was used as a positive electrode. A porous polyethylene separator was interposed between the positive electrode and the negative electrode, and an electrolyte solution obtained by dissolving vinylene carbonate to 0.5 part by weight in a mixed solution in which ethyl methyl carbonate (EMC) and ethylene carbonate (EC) were mixed in a volume ratio of 7:3, and dissolving $LiPF_6$ to a concentration of 1M was injected to manufacture a lithium coin half-cell.

In addition, the batteries of Example 2, Example 3, and Comparative Examples 1 to 4 were each prepared by the same manner as in Example 1, except that the negative electrode active materials of Example 2, Example 3, and Comparative Examples 1 to 4 were each used instead of the negative electrode active material of Example 1.

The prepared batteries were charged and discharged to evaluate discharge capacity, initial efficiency, and capacity retention rate, which are shown in Table 2.

The charge and discharge were performed at 0.1C for the first cycle and the second cycle, and the charge and discharge were performed at 0.5C from the third cycle. At the 300th cycle, the charge and discharge were terminated in a charge state (a state in which lithium ions were put in the negative electrode).

Charge conditions: CC (constant current)/CV (constant voltage) (5 mV/0.005C current cut-off)
Discharge conditions: CC (constant current) condition 1.5 V

The discharge capacity (mAh/g) and the initial efficiency (%) were derived from the result after charging and discharging once. Specifically, the initial efficiency (%) was derived by the following calculation.

$$\text{Initial efficiency (\%)} = (\text{discharge capacity after 1}^{st} \text{ discharge/1}^{st} \text{ charge capacity}) \times 100$$

The capacity retention rate was derived by the following calculation.

$$\text{Capacity retention rate (\%)} = (299^{th} \text{ discharge capacity/1}^{st} \text{ discharge capacity}) \times 100$$

[Table 2]

| Battery | Discharge capacity (mAh/g) | Initial efficiency (%) | Capacity retention rate (%) |
|---|---|---|---|
| Example 1 | 508 | 91.6 | 93.1 |
| Example 2 | 507 | 91.4 | 92.6 |
| Example 3 | 508 | 91.6 | 92.8 |
| Comparative Example 1 | 506 | 90.8 | 84.2 |
| Comparative Example 2 | 507 | 88.4 | 86.2 |
| Comparative Example 3 | 505 | 90.5 | 84.9 |
| Comparative Example 4 | 506 | 88.8 | 87.2 |

According to the negative electrode active material of the exemplary embodiment of the present invention, when manufacturing the negative electrode active material, Li is uniformly doped to minimize lithium by-products on the surface of the particles, and then the carbon layer is coated, so that it is possible to suppress side reactions of the slurry and to stabilize rheological properties of the slurry when forming the slurry. In addition, since crystalline $Li_2SiO_3$ and crystalline $Li_2Si_2O_5$ satisfy the appropriate ratio (p2/p1) or greater, the discharge capacity, initial efficiency, and capacity retention rate of the battery are all excellent.

In Table 2, it was confirmed that, in Examples 1 to 3, the peak intensity p2/p1 was 0.7 or greater, the Li/C mol ratio on the surface of the negative electrode active material was very low, and pH was low when dispersed in water. Therefore, it was confirmed that the rheological properties of the slurry were stable and the side reactions were minimized, and therefore, the discharge capacity, initial efficiency, and capacity retention rate of the battery were all excellent.

On the other hand, it was confirmed that in Comparative Examples 1 to 3, when manufacturing the negative electrode active material, the heat treatment was carried out without vaporizing the raw material, and therefore, unreacted lithium by-products were generated in the lithium doping process, so that the Li/C mol ratio near the surface of the negative electrode active material was very high and the strong base of pH 12 or greater was made when dispersed in water. Even when the additional inorganic coating was formed as in Comparative Example 3, it was confirmed that it was difficult to completely coat the negative electrode active material due to lithium by-products, and therefore, the negative electrode active material exhibited a strong base. Therefore, it was confirmed that the side reactions with the negative electrode active material occurred which deteriorated the physical properties of the slurry, resulting in decreases in initial efficiency and capacity retention rate.

In Comparative Example 4, it was confirmed that the ratio p2/p1 was less than 0.7, the content of the crystalline

$Li_2Si_2O_5$ was high, the discharge capacity loss per weight of the active material was large, and the lifespan characteristics were deteriorated due to the unstable structure, so that the initial efficiency and capacity retention rate were lowered.

**Claims**

1. A negative electrode active material comprising:

   silicon-based particles comprising a Li compound; and
   a carbon layer provided on at least a portion of the silicon-based particles,
   wherein, upon X-ray diffraction analysis, a ratio (p2/p1) of a peak intensity (p2) appearing at 18.8° to 19.0° to a peak intensity (p1) appearing at 24.7° to 24.9° is 0.7 or greater, and
   wherein a pH is 7 to 10 when 1g of the negative electrode active material is dispersed in 100 mL of water at 25°C.

2. The negative electrode active material of claim 1, wherein the silicon-based particles comprise $Li_2SiO_3$ and $Li_2Si_2O_5$.

3. The negative electrode active material of claim 1, wherein a concentration of Li does not have a concentration gradient from a center to a surface of the silicon-based particles.

4. The negative electrode active material of claim 1, wherein a molar ratio of Li to C (Li/C mol ratio) is 1 or less in XPS analysis of a surface of the negative electrode active material.

5. The negative electrode active material of claim 1, wherein a lithium by-product comprising one or more selected from the group consisting of lithium silicate, $Li_2O$, LiOH and $Li_2CO_3$ is not present on a surface of the negative electrode active material.

6. The negative electrode active material of claim 1, wherein Li included in the silicon-based particles is included in an amount of 5 parts by weight to 10 parts by weight on the basis of 100 parts by weight of a total of the negative electrode active material.

7. The negative electrode active material of claim 1, wherein the carbon layer is included in an amount of 0.1 part by weight to 10 parts by weight on the basis of 100 parts by weight of a total of the negative electrode active material.

8. A method of manufacturing a negative electrode active material, the method comprising:

   preparing a Si source and a Li source;
   vaporizing the Si source and the Li source by heat treatment;
   forming silicon-based particles comprising a Li compound by cooling a mixed gas of the vaporized Si source and Li source; and
   forming a carbon layer on the silicon-based particles.

9. The method of claim 8, wherein the Si source comprises one or more selected from the group consisting of Si powders and SiO powders.

10. The method of claim 8, wherein the Li source comprises one or more selected from the group consisting of $Li_2SiO_3$ powders, $Li_4SiO_4$ powders, $Li_2Si_2O_5$ powders and Li powders.

11. The method of claim 8, wherein the heat treatment is performed at 1200°C to 1600°C.

12. The method of claim 8, wherein the mixed gas is cooled at 500°C to 900°C.

13. A negative electrode slurry comprising the negative electrode active material of any one of claims 1 to 7.

14. A negative electrode comprising the negative electrode slurry of claim 13.

15. A secondary battery comprising the negative electrode of claim 14.

## INTERNATIONAL SEARCH REPORT

| International application No. |
|---|
| **PCT/KR2022/020025** |

**A.    CLASSIFICATION OF SUBJECT MATTER**

**H01M 4/36**(2006.01)i; **H01M 4/38**(2006.01)i; **H01M 4/58**(2010.01)i; **H01M 4/62**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/36(2006.01); H01M 10/052(2010.01); H01M 10/0525(2010.01); H01M 4/134(2010.01); H01M 4/48(2010.01); H01M 4/485(2010.01); H01M 4/58(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질(negative electrode active material), 이차전지(secondary battery), 실리콘계 입자(silicone based particle), Li, 기화(vaporization)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2019-0029711 A (OSAKA TITANIUM TECHNOLOGIES CO., LTD.) 20 March 2019 (2019-03-20)<br>　　　See paragraphs [0001], [0018], [0032], [0036], [0074] and [0075]; examples 1 and 3; and claims 1 and 6. | 1-15 |
| A | KR 10-2021-0107115 A (BTR NEW MATERIAL GROUP CO., LTD. et al.) 31 August 2021 (2021-08-31)<br>　　　See entire document. | 1-15 |
| A | US 2020-0403235 A1 (LG CHEM, LTD.) 24 December 2020 (2020-12-24)<br>　　　See entire document. | 1-15 |
| A | KR 10-1586816 B1 (DAE JOO ELECTRONIC MATERIALS CO., LTD.) 20 January 2016 (2016-01-20)<br>　　　See entire document. | 1-15 |

☑ Further documents are listed in the continuation of Box C.　　☑ See patent family annex.

| | |
|---|---|
| \*　Special categories of cited documents:<br>"A"　document defining the general state of the art which is not considered to be of particular relevance<br>"D"　document cited by the applicant in the international application<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **04 April 2023** | **04 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/020025** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0113444 A (SHIN-ETSU CHEMICAL CO., LTD.) 15 September 2021 (2021-09-15)<br>See entire document. | 1-15 |

Form PCT/ISA/210 (second sheet) (July 2022)

**INTERNATIONAL SEARCH REPORT**
Information on patent family members

International application No.

**PCT/KR2022/020025**

| Patent document cited in search report | | | Publication date (day/month/year) | Patent family member(s) | | | Publication date (day/month/year) |
|---|---|---|---|---|---|---|---|
| KR | 10-2019-0029711 | A | 20 March 2019 | CN | 109417168 | A | 01 March 2019 |
| | | | | CN | 109417168 | B | 26 November 2021 |
| | | | | CN | 113394389 | A | 14 September 2021 |
| | | | | EP | 3531483 | A1 | 28 August 2019 |
| | | | | EP | 3531483 | A4 | 22 April 2020 |
| | | | | JP | 2021-052014 | A | 01 April 2021 |
| | | | | JP | 6895450 | B2 | 30 June 2021 |
| | | | | JP | 7092860 | B2 | 28 June 2022 |
| | | | | US | 11031592 | B2 | 08 June 2021 |
| | | | | US | 2019-0190023 | A1 | 20 June 2019 |
| | | | | US | 2021-0242458 | A1 | 05 August 2021 |
| | | | | WO | 2018-074175 | A1 | 26 April 2018 |
| KR | 10-2021-0107115 | A | 31 August 2021 | CN | 112563476 | A | 26 March 2021 |
| | | | | EP | 3907792 | A1 | 10 November 2021 |
| | | | | EP | 3907792 | A4 | 04 May 2022 |
| | | | | JP | 2022-518585 | A | 15 March 2022 |
| | | | | JP | 7237167 | B2 | 10 March 2023 |
| | | | | US | 2022-0109140 | A1 | 07 April 2022 |
| | | | | WO | 2021-057929 | A1 | 01 April 2021 |
| US | 2020-0403235 | A1 | 24 December 2020 | CN | 111357137 | A | 30 June 2020 |
| | | | | CN | 111357137 | B | 03 June 2022 |
| | | | | EP | 3696893 | A1 | 19 August 2020 |
| | | | | EP | 3696893 | A4 | 16 December 2020 |
| | | | | KR | 10-2019-0060697 | A | 03 June 2019 |
| | | | | KR | 10-2288124 | B1 | 11 August 2021 |
| | | | | WO | 2019-103499 | A1 | 31 May 2019 |
| KR | 10-1586816 | B1 | 20 January 2016 | CN | 106537659 | A | 22 March 2017 |
| | | | | CN | 106537659 | B | 24 September 2021 |
| | | | | CN | 113937258 | A | 14 January 2022 |
| | | | | EP | 3136477 | A1 | 01 March 2017 |
| | | | | EP | 3136477 | A4 | 15 November 2017 |
| | | | | JP | 2018-519648 | A | 19 July 2018 |
| | | | | JP | 6775577 | B2 | 28 October 2020 |
| | | | | US | 10593933 | B2 | 17 March 2020 |
| | | | | US | 2018-0090750 | A1 | 29 March 2018 |
| | | | | WO | 2016-204366 | A1 | 22 December 2016 |
| KR | 10-2021-0113444 | A | 15 September 2021 | CN | 109155408 | A | 04 January 2019 |
| | | | | CN | 109155408 | B | 27 August 2021 |
| | | | | EP | 3467911 | A1 | 10 April 2019 |
| | | | | EP | 3467911 | A4 | 11 December 2019 |
| | | | | EP | 3467911 | B1 | 18 January 2023 |
| | | | | JP | 2021-103691 | A | 15 July 2021 |
| | | | | JP | 2022-116186 | A | 09 August 2022 |
| | | | | JP | 6859339 | B2 | 14 April 2021 |
| | | | | JP | 7082228 | B2 | 07 June 2022 |
| | | | | KR | 10-2019-0013774 | A | 11 February 2019 |
| | | | | KR | 10-2302508 | B1 | 17 September 2021 |
| | | | | KR | 10-2318855 | B1 | 28 October 2021 |
| | | | | TW | 201810777 | A | 16 March 2018 |
| | | | | US | 10991937 | B2 | 27 April 2021 |

Form PCT/ISA/210 (patent family annex) (July 2022)

INTERNATIONAL SEARCH REPORT
Information on patent family members

International application No.

**PCT/KR2022/020025**

| Patent document cited in search report | Publication date (day/month/year) | Patent family member(s) | | | Publication date (day/month/year) |
|---|---|---|---|---|---|
| | | US | 2019-0131618 | A1 | 02 May 2019 |
| | | WO | 2017-208624 | A1 | 07 December 2017 |

Form PCT/ISA/210 (patent family annex) (July 2022)

**EP 4 340 063 A1**

**REFERENCES CITED IN THE DESCRIPTION**

**Patent documents cited in the description**

- KR 1020210176769

- KR 1020120051765